# FASCICULE DE BREVET EUROPEEN

(11) **EP 4 460 172 B1**
(45) Date de publication et mention de la délivrance du brevet: **09.07.2025**
(21) Numéro de dépôt: 22850589.7
(22) Date de dépôt: 19.12.2022
(51) Int. Cl.: A01B 59/06, A01B 63/118, A01B 63/111

(54) **DISPOSITIF ET SYSTÈME D'INTERFACE ENTRE UN ATTELAGE DE TRACTEUR AGRICOLE ET UN OUTIL**
VORRICHTUNG UND SYSTEM ZUR SCHNITTSTELLE ZWISCHEN EINER LANDWIRTSCHAFTLICHEN TRAKTORKUPPLUNG UND EINEM ARBEITSGERÄT
DEVICE AND SYSTEM FOR INTERFACE BETWEEN AN AGRICULTURAL TRACTOR HITCH AND A TOOL

(30) Priorité: 04.01.2022 FR 2200048
(43) Date de publication de la demande: 13.11.2024
(73) Titulaire: PM Diffusions 01, 01310 Curtafond (FR)
(72) Inventeur: MAZUIR, Pascal, 01310 CURTAFOND (FR)
(74) Mandataire: Ipside
(86) Numéro de dépôt international: PCT/FR2022/052420
(87) Numéro de publication internationale: WO 2023/131754

(56) Documents cités:
- EP-A2- 2 283 719
- WO-A1-2014/044932
- WO-A1-2017/177014
- WO-A1-2021/113165
- US-A1- 2017 079 191

## Description

### DOMAINE TECHNIQUE

La présente invention appartient au domaine général du machinisme agricole, notamment des liaisons mécaniques [tracteur - outil] permettant d'atteler et de manœuvrer un outil monté sur un tracteur, et concerne plus particulièrement un dispositif et un système d'interface entre l'attelage d'un tracteur agricole et un outil de travail du sol.

### ÉTAT DE L'ART

On connait différents dispositifs de liaison permettant de relier mécaniquement un tracteur agricole à des outils de travail du sol (cultivateur, bineuse, herse, etc.). En règle générale, ces liaisons sont présentes sur le tracteur. Certaines consistent en des éléments mécaniques pour l'accrochage de l'outil au tracteur, d'autres correspondent à des connexions pour une transmission de puissance du tracteur vers l'outil.

Selon la nature de l'outil, la liaison avec le tracteur peut être réalisée avec différents attelages qui peuvent être positionnés aussi bien à l'arrière qu'à l'avant du tracteur. Les attelages dits trois points sont utilisés sur les tracteurs depuis de nombreuses décennies pour y monter divers outils, et comportent principalement une combinaison de trois barres (ou bras), une barre supérieure et deux barres inférieures, chacune étant articulée à ses extrémités à des points respectifs sur le tracteur et sur l'outil.

Historiquement, l'invention de l'attelage trois points revient à Harry Ferguson qui s'est vu délivrer en 1926 le brevet GB253566 ayant pour titre « *Apparatus for coupling agricultural implements to tractors and automatically regulating the depth of work* » (en français « appareils pour atteler des outils agricoles à des tracteurs et réguler automatiquement la profondeur de travail »). Ce même inventeur est à l'origine de nombreux perfectionnements à son attelage trois points initial, dont le plus notable est le relevage hydraulique qui en a fait une solution pratique et efficace qui s'est généralisée dans le monde des tracteurs agricoles.

En effet, avant les années 1950, chaque constructeur avait son propre système de liaison des outils au tracteur. Le plus répandu était le système à deux points, qui ne permettait pas de relever de nombreux outils. À cette époque, les agriculteurs devaient acheter des outils de la même marque que leur tracteur pour pouvoir les atteler correctement, ou se procurer des kits d'adaptation souvent malcommodes, délicats à ajuster, voire dangereux.

Après l'expiration des brevets concernés, notamment ceux de Harry Ferguson, les constructeurs de tracteurs furent en mesure d'apporter des modifications utiles au système d'attelage initial. Cela s'est traduit par une multitude de brevets se rapportant à l'attelage trois points.

Des attelages à relevage sont par exemple décrits dans les documents US3791456A (ajout de chaines pour la stabilité latérale), FR2453585A1 (utilisation sur une effeuilleuse de betteraves) et WO2010133936A1 (bras escamotables pour le transport sur route).

Le document WO 2014/044932 A1 décrit un autre dispositif d'interface pour relier mécaniquement un engin agricole à un outil de travail du sol.

Un attelage peut être fixé à l'arrière ou à l'avant du tracteur pour tracter ou pousser un outil.

Toutefois, un outil tracté peut occasionner un soulèvement de l'avant du tracteur en cas d'effort important, ce qui nuit à l'adhérence au sol des roues avant du tracteur. De plus, ce soulèvement de l'avant du tracteur altère le changement de direction du tracteur par pivotement des roues avant.

De même, un outil poussé peut occasionner un enfoncement de l'avant du tracteur en cas d'effort important et donc un soulèvement des roues arrière, ce qui nuit à l'adhérence au sol des roues arrière du tracteur. De plus l'enfoncement des roues avant et, dans une moindre mesure, le soulèvement des roues arrière nécessite une puissance moteur plus importante pour faire avancer l'ensemble (tracteur + outil). De façon connue, des capteurs de hauteur placés à proximité des roues avant du tracteur permettent d'ajuster la hauteur de l'outil, mais pas de manière satisfaisante. De surcroît, les manœuvres indésirables précitées perturbent la stabilité de l'ensemble et surtout celle de l'outil de travail du sol qui doit rester stable pour respecter une profondeur de travail régulière par exemple.

Le document FR2902279 enseigne que la stabilité d'un outil agricole est un facteur critique, et ce d'autant plus que les vitesses de travail et de déplacement des tracteurs ne cessent d'augmenter au fil des ans. Une manière possible d'améliorer la stabilité d'un outil agricole semi-porté est d'en abaisser les centres de gravité à charge et à vide. Cette solution n'est toutefois pas compatible avec l'agencement de certains outils semi-portés, et nécessite en général des modifications substantielles de la structure de tels outils.

Il existe des adaptateurs destinés à être montés entre l'attelage du tracteur et l'outil pour faciliter la commande dudit outil.

Le document US3561789 décrit un attelage trois points comportant un adaptateur pour l'attelage rapide d'un outil à un tracteur. La commande automatique assure le déplacement horizontal et vertical de l'adaptateur à trois points d'attache pour faciliter l'attelage. L'adaptateur d'attelage utilisé est d'un seul tenant, articulé sur l'extrémité arrière de la tringle supérieure et sur les extrémités arrière des bras tracteurs inférieurs, et coopère avec un mécanisme d'attelage monté sur cet adaptateur d'attelage, près de ladite tringle et desdits bras, pour assurer l'accouplement à un outil et une commande, montée sur le tracteur entre une source d'énergie, portée par le tracteur, et les moyens automatiques agissant les uns sur ladite tringle et les autres sur lesdits bras pour provoquer sélectivement l'avance, le recul, le soulèvement ou l'abaissement de l'adaptateur d'attelage par rapport au tracteur.

Cet adaptateur ne permet aucun suivi latéral de l'outil et sa mise en œuvre reste complexe.

### PRÉSENTATION DE L'INVENTION

La présente invention vise à pallier les inconvénients de l'art antérieur exposés ci-avant et propose une solution innovante par sa conception cinématique et fonctionnelle pour assurer une liaison [engin agricole - outil] facilement manœuvrable, qui garantit une meilleure stabilité de l'outil aussi bien longitudinale que latérale.

À cet effet, la présente invention a pour objet un dispositif d'interface pour relier mécaniquement un engin agricole, par l'intermédiaire d'un attelage tel qu'un attelage trois points à relevage, à un outil aratoire, comprenant des moyens de liaison côté engin, aptes à être montés sur l'attelage de l'engin, des moyens de liaison côté outil, aptes à être montés sur l'outil, et un cadre proximal solidaire des moyens de liaison côté engin. Ce dispositif d'interface est remarquable en ce qu'il comprend des éléments coulissants solidaires des moyens de liaison côté outil, lesdits éléments étant mobiles en translation longitudinalement par rapport au cadre proximal de sorte à régler une hauteur desdits moyens de liaison côté outil, et un cadre distal parallèle au cadre proximal et mobile en rotation par rapport à celui-ci. Ainsi, le dispositif d'interface selon l'invention présente une première partie fixe par rapport à l'engin et une deuxième partie fixe par rapport à l'outil, mais mobile par rapport à la première partie dans un plan longitudinal, perpendiculaire à la direction de déplacement du tracteur, afin d'assurer un suivi longitudinal et transversal de l'outil.

Selon un mode de réalisation avantageux, le dispositif d'interface comporte au moins un vérin de levage pour soulever et abaisser les éléments coulissants à une hauteur souhaitée.

Cela permet par conséquent de régler la profondeur de travail de l'outil et de la maintenir la plus uniforme possible grâce à des informations provenant de capteurs de hauteur comme expliqué plus loin.

Selon un mode de réalisation, le dispositif d'interface comporte en outre un vérin de contrôle latéral pour faire pivoter le cadre distal à une inclinaison donnée.

Cela permet de corriger l'inclinaison de l'outil pour garder une stabilité latérale lors du travail du sol.

Selon un mode de réalisation particulier, les éléments coulissants comprennent un élément coulissant/pivotant supérieur, solidaire d'un moyen de liaison supérieur, et deux éléments coulissants inférieurs transversalement espacés et solidaires chacun d'un moyen de liaison inférieur, l'élément coulissant/pivotant supérieur étant couplé à chaque élément coulissant inférieur au moyen d'une bielle articulée à ses deux extrémités.

Avantageusement, les moyens de liaison côté engin sont agencés suivant une configuration en trois points, et comprennent une chape supérieure et deux chapes inférieures transversalement espacées.

Plus avantageusement encore, la chape supérieure et les chapes inférieures présentent chacune plusieurs points d'articulation pour s'adapter à de larges gammes d'attelages et d'outils.

Pareillement, les moyens de liaison coté outil sont agencés suivant une configuration en trois points, et comprennent un moyen de liaison supérieur à plusieurs points d'articulation et deux moyens de liaison inférieurs transversalement espacés et comportant chacun un crochet d'attelage.

De ce fait, le dispositif d'interface présente une configuration en trois points sur chacune de ses faces de sorte à venir s'interfacer convenablement entre un attelage trois points standard et un outil. La liaison directe [engin - outil] se trouve ainsi déportée, ce qui permet de manœuvrer l'outil plus facilement, grâce à la conception spécifique de la présente invention, tout en gardant l'attelage en position fixe afin de s'affranchir des difficultés de pilotage qu'il pose habituellement.

L'invention a également pour objet un système d'interface pour relier un engin agricole à un outil aratoire, comprenant un dispositif d'interface tel que présenté, des capteurs amovibles aptes à être installés sur l'outil, un module de contrôle électrique relié électriquement auxdits capteurs, un module de contrôle hydraulique relié électriquement au module de contrôle électrique et pilotant le dispositif d'interface via une alimentation hydraulique.

Selon un mode de réalisation particulièrement avantageux, le système d'interface comprend en outre, pour au moins un vérin de levage, un premier accumulateur hydropneumatique relié à une chambre du vérin et un deuxième accumulateur hydropneumatique relié à l'autre chambre du vérin, de sorte à réaliser un transfert de charge variable sur l'outil, autrement dit à apporter une charge verticale supplémentaire ou à soulager l'outil en fonction de la dureté du sol et de la profondeur de travail souhaitée.

L'invention a également pour objet un engin agricole, tel qu'un tracteur agricole à roues, comportant un dispositif d'interface tel que présenté, monté sur un attelage de l'engin de façon amovible ou complètement intégrée. L'attelage de l'engin peut être un attelage standard de type trois points à relevage.

L'invention a également pour objet un outil agricole aratoire (cultivateur, bineuse, herse, pulvériseur, etc.) comportant un dispositif d'interface tel que présenté, amovible ou intégré.

Enfin, l'invention a également pour objet une machine agricole comprenant soit un engin agricole tel que présenté relié à un outil, soit un outil agricole tel que présenté relié à un engin agricole.

Les concepts fondamentaux de l'invention venant d'être exposés ci-dessus dans leur forme la plus élémentaire, d'autres détails et caractéristiques ressortiront plus clairement à la lecture de la description qui suit et en regard des dessins annexés, donnant à titre d'exemple non limitatif un mode de réalisation d'un dispositif et d'un système d'interface entre un engin agricole et un outil, conformes aux principes de l'invention.

### BRÈVE DESCRIPTION DES FIGURES

Les figures sont données à titre purement illustratif pour l'intelligence de l'invention et ne limitent pas la portée de celle-ci. Les différents éléments sont représentés de manière schématique et ne sont pas nécessairement à la même échelle. Sur l'ensemble des figures, les éléments identiques ou équivalents portent la même référence numérique.

Il est ainsi illustré en :
- Figure 1 : une vue de profil d'un dispositif d'interface selon l'invention reliant le relevage avant d'un tracteur agricole à un outil frontal de travail du sol ;
- Figure 2 : une vue partielle de la figure 1 avec le dispositif d'interface représenté en coupe longitudinale ;
- Figure 2A : un détail A de la figure 2 ;
- Figure 3 : une vue en coupe longitudinale d'un dispositif d'interface selon un premier mode de réalisation de l'invention ;
- Figure 4 : une vue de face d'une partie centrale du dispositif d'interface de la figure 3 ;
- Figure 5 : différentes positions du dispositif d'interface de la figure 4 ;
- Figure 6 : différentes positions d'un dispositif d'interface selon un deuxième mode de réalisation de l'invention ;
- Figure 7 : une vue arrière d'un dispositif d'interface (côté tracteur) selon un troisième mode de réalisation de l'invention ;
- Figure 8 : une vue de face du dispositif d'interface (côté outil) de la figure 7 ;
- Figure 9 : un schéma bloc simplifié des principaux éléments d'un système d'interface selon l'invention.

### DESCRIPTION DÉTAILLÉE DE MODES DE RÉALISATION

Il convient de noter que certains éléments techniques bien connus de l'homme du métier sont ici rappelés pour éviter toute insuffisance ou ambiguïté dans la compréhension de la présente invention.

Dans le mode de réalisation décrit ci-après, on fait référence à un dispositif d'interface permettant de relier un tracteur agricole via son attelage à un outil de travail, destiné principalement à être monté sur des relevages avant de tracteurs et à coopérer avec des outils de travail du sol. Cet exemple, non limitatif, est donné pour une meilleure compréhension de l'invention et n'exclut pas l'adaptation du dispositif d'interface à un quelconque système porte-outil, avant ou arrière, d'un engin agricole différent du tracteur.

Dans la suite de la description, le terme « tracteur » désigne par extension un tracteur agricole à roues ; l'avant du tracteur correspond à l'extrémité dominante du tracteur lorsque celui-ci se déplace sur la route dans le sens normalement accepté et qui est caractérisé par rapport à la position du siège, du volant, des commandes et de l'équipement de signalisation lumineuse routière ; le terme « relevage », largement employé dans le jargon agricole, désigne un attelage à relevage tel que l'attelage trois points à relevage assisté.

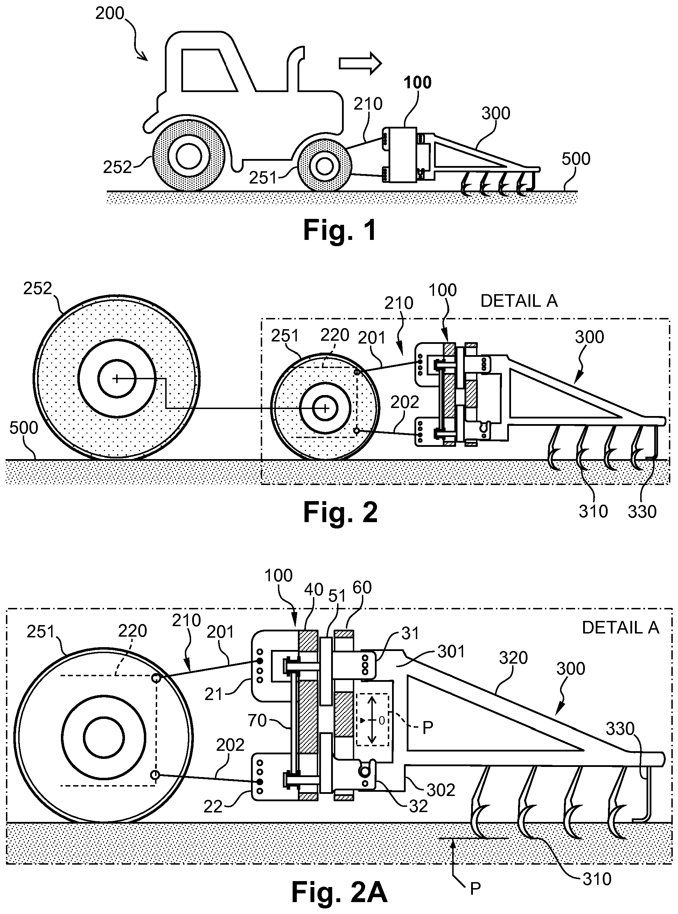

La figure 1 représente un dispositif d'interface 100 reliant un tracteur 200, comprenant des roues avant 251 et arrière 252, à un outil 300 aratoire, ici un cultivateur, pour préparer un sol 500. Le dispositif d'interface 100 est monté sur un relevage avant 210 du tracteur 200 qui permet de pousser l'outil 300 suivant le sens d'avancement du tracteur indiqué par une flèche droite.

Bien entendu, le dispositif d'interface 100 peut être accouplé à tout outil agricole adapté (herse, rouleau, bineuse, pulvériseur, décompacteur, etc.).

En référence à la figure 2, le relevage avant 210 est de type trois points et comprend, selon une configuration conventionnelle connue de l'état de la technique, un châssis propre à être fixé par boulonnage à une ossature 220 du tracteur 200, un bras supérieur 201 dirigé vers l'avant, articulé sur le tracteur et agencé pour être rallongé ou raccourci par des moyens automatiques, et deux bras inférieurs 202, dirigés vers l'avant et transversalement espacés, articulés sur le tracteur et agencés pour être soulevés et abaissés autour de leur articulation par d'autres moyens automatiques.

Il convient de rappeler que le réglage de la longueur du bras supérieur 201 permet de changer le pas du cultivateur 300 de sorte que les dents 310 interagissent avec le sol 500 à une profondeur de travail P sensiblement uniforme comme représenté sur la figure 2A.

Ainsi, en déportant la liaison entre le relevage 210 et l'outil 300, le dispositif d'interface 100 permet d'utiliser ledit relevage en position fixe et, par là-même, d'améliorer la stabilité de l'ensemble constitué par le tracteur 200 et l'outil 300 comme expliqué ci-après.

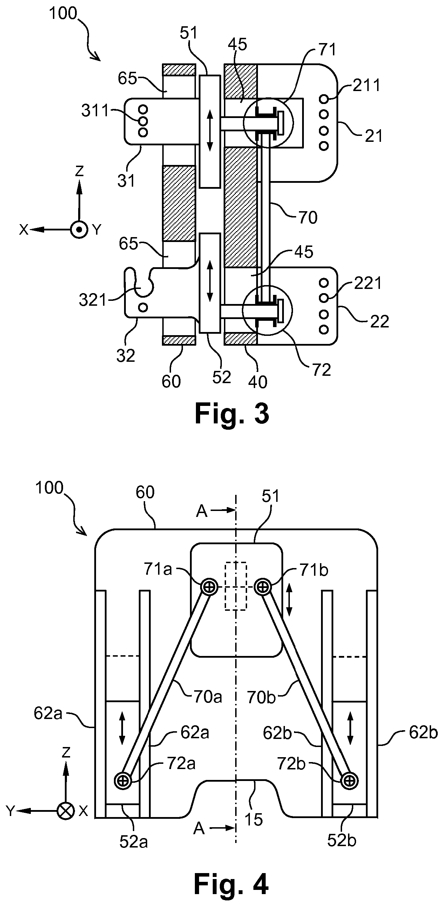

La figure 3 représente, selon un premier mode de réalisation dit « à deux vérins », le dispositif d'interface 100 isolé, celui-ci comporte des moyens de liaison côté tracteur et des moyens de liaison côté outil. Le côté tracteur est situé à l'arrière du dispositif d'interface et correspond aux X décroissants selon le système d'axes (X, Y, Z) représenté. Inversement, le côté outil est situé à l'avant du dispositif d'interface et correspond aux X croissants. Les moyens de liaison côté tracteur comprennent un moyen d'attelage supérieur 21 à plusieurs points d'articulation 211 et deux moyens d'attelage inférieurs 22 à plusieurs points d'articulation 221, lesdits moyens d'attelage étant sous forme de chapes. De même, les moyens de liaison côté outil comprennent un moyen d'attelage supérieur 31 à plusieurs points d'articulation 311, faisant office de troisième point, et deux moyens d'attelage inférieurs 32 pourvus chacun d'un crochet d'attelage 321.

Ainsi, les moyens de liaison du dispositif d'interface 100, aussi bien du côté tracteur que du côté outil, sont agencés en trois points à l'image du relevage du tracteur. Du côté tracteur, la chape supérieure 21 et les chapes inférieures 22 sont positionnées de sorte à ce que les bras 201 et 202 du relevage 210 du tracteur soient convenablement fixés comme représenté sur la figure 2A. Plus particulièrement, les points d'articulation 211 et 221 des chapes 21 et 22 sont situés dans un même plan pour s'adapter aux extrémités libres, ou avant, des bras de relevage.

De façon analogue, le point supérieur 31 et les moyens d'attelage inférieurs 32, côté outil, sont positionnés de sorte à recevoir convenablement l'attelage de l'outil 300 comme représenté sur la figure 2A.

La présence d'une pluralité de points d'articulation sur les chapes 21 et 22 et sur le point supérieur 31 offre une possibilité de réglage en position des bras de relevage et permet une adaptabilité du dispositif d'interface à différentes gammes d'outils.

Le dispositif d'interface 100 comporte un cadre 40, dit proximal, au niveau des moyens de liaison 21 et 22 côté tracteur, un cadre 60, dit distal, au niveau des moyens de liaison 31 et 32 côté outil, et des éléments coulissants 51 et 52 entre lesdits cadres. Selon l'exemple de réalisation illustré, les éléments coulissants comprennent un élément coulissant/pivotant supérieur 51 et deux éléments coulissants inférieurs 52 dont un seul est visible sur la figure 3.

En référence à la figure 4, l'élément coulissant/pivotant supérieur 51 est centré transversalement par rapport au dispositif d'interface 100 lorsqu'il est au repos, autrement dit, il est placé symétriquement par rapport à un axe longitudinal de symétrie du dispositif d'interface. Les éléments coulissants inférieurs 52a et 52b sont quant à eux symétriques par rapport à cet axe longitudinal de symétrie. Les éléments 51 et 52 reproduisent donc le même agencement en trois points que celui des moyens de liaison 31 et 32 côté outil. De ce fait, l'élément coulissant/pivotant supérieur 51 se trouve derrière le point supérieur 31 et chaque élément coulissant inférieur 52 se trouve derrière un moyen d'attelage inférieur 32.

L'élément coulissant/pivotant supérieur 51 et les éléments coulissants inférieurs 52 sont solidaires respectivement du troisième point 31 et des moyens d'attelage inférieurs 32 comme représenté sur la figure 3.

De plus, l'élément coulissant/pivotant supérieur 51 est relié aux deux éléments coulissants inférieurs 52 par deux bielles 70 de renvoi disposées en triangle. Chaque bielle est articulée à son extrémité supérieure 71 et à son extrémité inférieure 72 à l'élément coulissant/pivotant supérieur 51 et à un élément coulissant inférieur 52 respectivement.

En référence à la figure 4, l'élément coulissant inférieur gauche 52a est relié à l'élément coulissant/pivotant supérieur 51 par la bielle 70a, et l'élément coulissant inférieur droit 52b est relié à l'élément coulissant/pivotant supérieur 51 par la bielle 70b.

Les bielles 70 assurent ainsi une transmission du mouvement entre les différents éléments 51 et 52, qui s'animent en l'occurrence d'un mouvement de translation suivant l'axe longitudinal du dispositif d'interface 100. Ces mouvements de translation longitudinale sont représentés par les flèches doubles sur les figures 3 et 4.

En effet, chaque élément coulissant inférieur 52 est apte à translater longitudinalement dans un guide 62, actionné par un vérin non représenté sur les figures 3 et 4, la direction longitudinale correspondant à l'axe Z selon le système d'axes représenté. Ce mouvement de translation rectiligne des éléments coulissants inférieurs 52 est communiqué à l'élément coulissant/pivotant supérieur 51 par l'intermédiaire des bielles 70 de renvoi. Compte tenu de l'encastrement entre les éléments 51 et 52 et les moyens de liaison 31 et 32 côté outil, ces derniers s'animent également d'un même mouvement d'ensemble que les éléments51 et 52. Les mouvements de translation rectiligne des éléments coulissants inférieurs 52 produisent, par le biais des bielles 70 articulées, un mouvement complexe à la fois de translation rectiligne ou curviligne et de rotation de l'élément coulissant/pivotant 51 dans un même plan « en sandwich » entre le cadre proximal 40 et le cadre distal 60.

Le cadre proximal 40 et le cadre distal 60 sont parallèles et écartés d'une distance permettant le mouvement des éléments 51 et 52. En outre, des ouvertures 45 et 65 sont ménagées dans les cadres 40 et 60 pour autoriser le mouvement de l'ensemble mobile comprenant les moyens de liaison 31 et 32 côté outil. Ces ouvertures 45 et 65 présentent des formes et des dimensions adaptées autorisant la translation et la rotation des éléments concernés avec une course et un débattement angulaire déterminés.

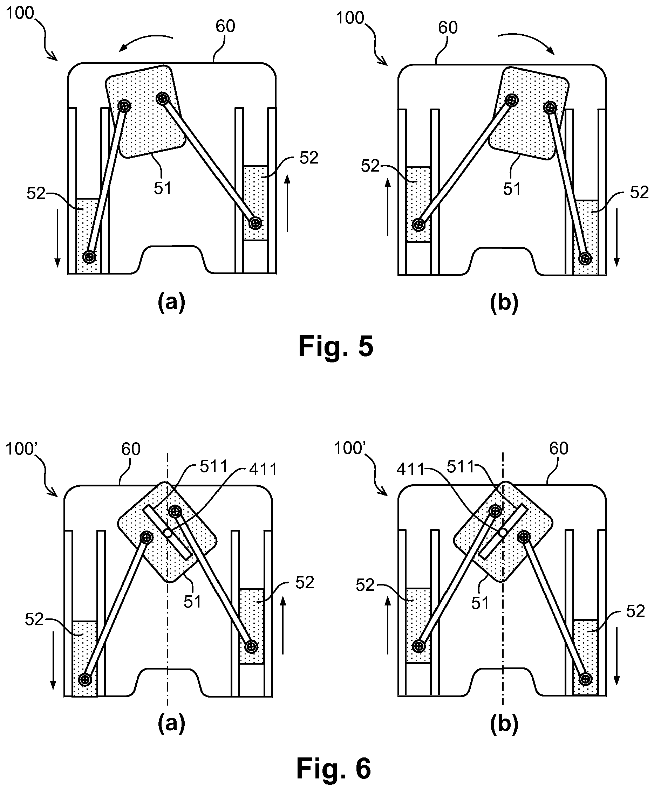

La figure 5 représentent deux positions possibles (a) et (b) du dispositif d'interface 100 obtenues par des translations en sens inverses des éléments coulissants 52. Ces translations produisent à la fois un décalage latéral et un basculement de l'élément coulissant/pivotant supérieur 51. Ce dernier peut ainsi s'écarter de l'axe central du dispositif d'attelage 100.

La figure 6 représente, selon un deuxième mode de réalisation dit « à lumière », un dispositif d'attelage 100', qui est une alternative au dispositif d'attelage 100 à deux vérins, permettant de garder l'élément coulissant/pivotant supérieur 51 centré en permanence sur l'axe central du dispositif d'attelage grâce à une lumière 511 axiale traversée par un tenon 411 solidaire d'un cadre dudit dispositif, de préférence le cadre proximal 40.

Bien entendu, on peut également envisager une configuration inverse dans laquelle la lumière est réalisée dans l'un des cadres suivant l'axe central et dans laquelle le tenon est monté sur un axe longitudinal central de l'élément coulissant/pivotant 51 solidaire de celui-ci.

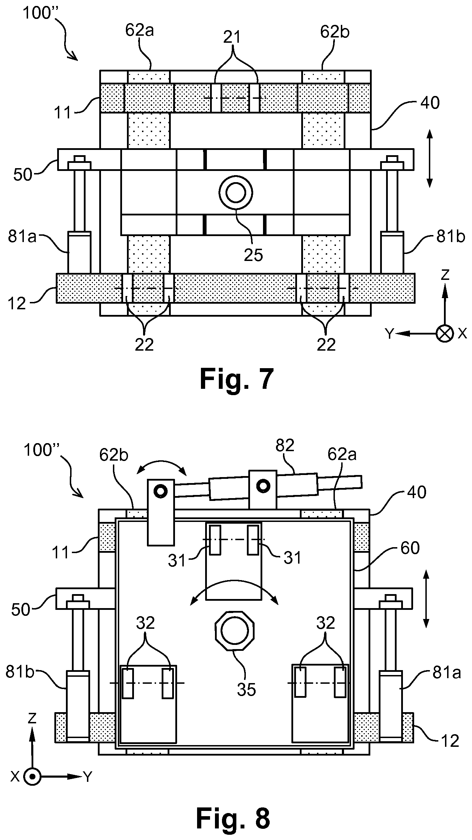

Les figures 7 et 8 représentent, selon un troisième mode de réalisation dit « à trois vérins », respectivement, en vue de face, le côté tracteur et le côté outil d'un dispositif d'interface 100", permettant un accouplement dynamique avec le relevage avant du tracteur et l'attelage de l'outil. Selon l'exemple de réalisation illustré sur ces figures, le dispositif d'interface 100" comporte, outre les éléments mentionnés ci-avant, des barres transversales d'attelage, supérieure 11 et inférieure 12, un axe d'accouplement côté tracteur 25 prolongé 35 sur le côté outil, deux vérins 81a et 81b de levage de l'élément coulissant 50, et un vérin équilibré 82 pour un contrôle latéral de l'outil qui sera fixé au dispositif d'interface 100".

La barre d'attelage supérieure 11 et la barre d'attelage inférieure 12 reçoivent respectivement la chape supérieure 21 et les chapes inférieures 22 pour le montage du dispositif d'interface 100" sur le tracteur 200 comme représenté sur la figure 2A. Un avantage fondamental de la présente invention réside dans la disposition des cadres 40 et 60 et leur mobilité relative, permettant au dispositif d'interface de suivre les mouvements du tracteur et de l'outil tout en améliorant la stabilité longitudinale et la stabilité latérale dudit outil. En effet, le cadre proximal 40 constitue le bâti par rapport auquel se meuvent à la fois les éléments coulissants 50, en translation rectiligne suivant l'axe Z, et le cadre distal 60 en rotation autour de l'axe X.

Le mouvement de translation des éléments coulissants 50 suivant l'axe Z est assuré par les vérins de levage 81a et 81b et permet de soulever ou d'abaisser les moyens de liaison 31 et 32 côté outil tel un relevage conventionnel. Ce premier mouvement se substitue donc au mouvement de levage du relevage 210 du tracteur 200, qui peut être avantageusement utilisé en position fixe. Bien entendu, un seul vérin de levage peut suffire. Néanmoins la configuration avec deux vérins, placés aux extrémités latérales du dispositif d'interface, est préférée pour un meilleur équilibre mécanique et une usure moins importante.

La mobilité en rotation du cadre distal 60 autour de l'axe X (roulis), représenté par une flèche double incurvée au centre de la figure 8, permet au dispositif d'interface 100 de suivre le mouvement de l'outil accouplé à l'axe 35, mouvement conditionné par les irrégularités et le relief du sol. Ainsi, pour maintenir une stabilité latérale de l'outil, le vérin 82 agit sur le cadre rotatif 60 en réponse à une commande asservie de maintien de la position angulaire.

De préférence, les vérins 81 de levage longitudinal et le vérin 82 de contrôle latéral sont hydrauliques et présentent une course importante afin d'obtenir un dégagement le plus adapté possible au relief du sol à travailler.

Outre un transfert de charge « normal » dû aux degrés de mobilité du dispositif d'interface 100, celui-ci est apte à réaliser un transfert de charge variable pour permettre à l'outil de travail de s'adapter au type de sol, à la dureté du sol et à l'humidité du sol. Par exemple, sur des sols très durs, il est nécessaire de faciliter la pénétration d'un outil tel qu'une bineuse en lui apportant une charge verticale supplémentaire. À l'inverse, sur des sols moins durs, il est préférable de soulager l'outil.

Par conséquent, le dispositif d'interface 100" comprend des premiers accumulateurs hydropneumatiques reliés aux chambres supérieures des vérins de levage 81 et des deuxièmes accumulateurs hydropneumatiques reliés aux chambres inférieures desdits vérins, avec des plages de réglage adéquates, pour respectivement apporter une charge plus ou moins importante sur l'outil de travail et soulager plus ou moins ledit outil. Ces accumulateurs hydropneumatiques ne sont pas représentés et leur réglage peut être opéré depuis la cabine du tracteur en faisant varier la pression hydraulique d'un circuit auxiliaire des vérins de levage du dispositif d'interface.

Les dispositifs d'interface 100, 100' et 100" ainsi décrits fonctionnent grâce à des servitudes associées permettant à un opérateur humain de commander les différents mouvements desdits dispositifs à partir de la cabine du tracteur. La commande du dispositif d'interface peut être manuelle ou automatique.

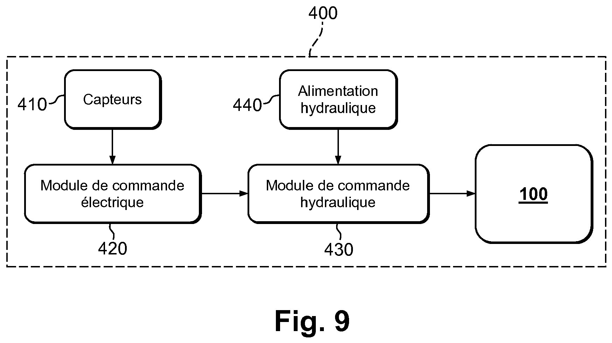

La figure 9 représente un système d'interface 400 comprenant le dispositif d'interface 100 et un ensemble de servitudes amont, électrique, électroniques et hydrauliques, nécessaires à son fonctionnement, à savoir un ou plusieurs capteurs 410, un module de commande électrique 420, un module de commande hydraulique 430, lesdits modules étant regroupés dans un boitier électronique de contrôle, et une alimentation hydraulique 440.

Les capteurs 410 comprennent au moins un capteur d'angle, installé sur le relevage 210 du tracteur 200, et des capteurs de hauteur installés sur l'outil 300, de préférence sur le devant de son châssis 320, et répartis suivant la largeur dudit châssis.

Le capteur d'angle permet de réinitialiser le dispositif d'interface 100 en position médiane au moyen du vérin de contrôle latéral 82, ou d'inclinaison.

Les capteurs de hauteur permettent quant à eux de positionner l'outil en fonction de la profondeur de travail souhaitée, par l'action des vérins de levage 81. Ces capteurs peuvent être amovibles et réglables en hauteur au moyen d'un système de réglage et dépose rapide tel qu'une barre à trous, une tige filetée ou tout autre mécanisme adapté connu de l'homme du métier.

Les capteurs de hauteur peuvent en outre être fixés sur un support constituée de deux parties : une première partie fixée sur l'outil et une seconde partie au contact du sol (palpeurs). Ainsi, la mesure de hauteur peut s'effectuer avec un ou plusieurs capteurs reliés à un dispositif de suivi du sol 330, représenté sur la figure 2, tel qu'un patin, une roue ou plusieurs roues en bogie, ou un ski.

Les données issues des capteurs 410 permettent de commander les vérins 81 et 82 du dispositif d'interface 100 afin d'assurer le suivi longitudinal et le suivi latéral de l'outil de travail fixé sur ledit dispositif, et de contrôler de façon adaptative la stabilité de l'ensemble.

Bien entendu, les données des capteurs sont d'abord transmises, traitées et compilées dans le module de commande électrique 420 qui envoie des signaux de consignes au module de commande hydraulique 430 qui, ensuite, commande les vérins du dispositif d'interface 100 et l'alimentation hydraulique 440 nécessaire. Cette alimentation hydraulique est assurée par une pompe et des distributeurs hydrauliques du tracteur, mais peut alternativement être autonome.

Plus particulièrement, le module de commande électrique 420 permet de commander le dispositif d'interface 100 soit en mode manuel (action de l'opérateur) soit en mode automatique (grâce aux signaux électriques provenant des capteurs) ; et le module de commande hydraulique 430 permet de piloter les vérins de levage 81 (hauteur de travail) et le vérin de contrôle latéral 82 (inclinaison) par des électrovannes proportionnelles à commande électrique.

De ce fait, le boitier de contrôle permet d'agir de façon centralisée sur tous les éléments et servitudes du système d'interface, notamment de contrôler manuellement la position (haute et basse) et l'inclinaison (gauche et droite) de l'outil de travail au moyen d'un joystick par exemple (lame niveleuse pour aplanir le sol horizontalement), de changer en conséquence la profondeur de travail dudit outil depuis la cabine du tracteur, de régler la sensibilité et la réactivité du dispositif d'interface 100, de bloquer celui-ci dans une position donnée lors du transport sur route, et d'assurer d'autres fonctionnalités selon le besoin le degré de perfectionnement du système d'interface.

Il ressort clairement de la présente description que certains éléments du dispositif et du système d'interface, découlant directement de modes de réalisation particuliers, peuvent être modifiés, remplacés ou supprimés et que certains ajustements peuvent être apportés à l'utilisation de ce dispositif et de ce système, sans pour autant sortir du cadre de l'invention tel que défini par les revendications.

## Revendications

1. Dispositif d'interface (100, 100', 100") pour relier mécaniquement un engin agricole (200), par l'intermédiaire d'un attelage (210), à un outil (300) de travail du sol, comprenant des moyens de liaison (21, 22) côté engin, aptes à être montés sur l'attelage de l'engin, des moyens de liaison (31, 32) côté outil, aptes à être montés sur l'outil, et un cadre proximal (40) solidaire des moyens de liaison côté engin, **caractérisé en ce qu'**il comprend des éléments coulissants (50, 51, 52) solidaires des moyens de liaison côté outil, lesdits éléments étant mobiles en translation longitudinale par rapport au cadre proximal de sorte à régler une hauteur desdits moyens de liaison côté outil, et un cadre distal (60) parallèle au cadre proximal et mobile en rotation par rapport à celui-ci.

2. Dispositif d'interface selon la revendication 1, comportant au moins un vérin de levage (81a, 81b) pour soulever et abaisser les éléments coulissants (50, 51, 52) à une hauteur souhaitée.

3. Dispositif d'interface selon la revendication 1 ou 2, comportant en outre un vérin de contrôle latéral (82) pour faire pivoter le cadre distal (60) à une inclinaison donnée.

4. Dispositif d'interface selon l'une quelconque des revendications précédentes, dans lequel les éléments coulissants comprennent un élément coulissant/pivotant supérieur (51), solidaire d'un moyen de liaison supérieur (31), et deux éléments coulissants inférieurs (52a, 52b) transversalement espacés et solidaires chacun d'un moyen de liaison inférieur (32), l'élément coulissant/pivotant supérieur étant couplé à chaque élément coulissant inférieur au moyen d'une bielle (70) articulée à chacune de ses extrémités (71, 72).

5. Dispositif d'interface selon l'une quelconque des revendications précédentes, dans lequel les moyens de liaison côté engin (21, 22) sont agencés suivant une configuration en trois points, et comprennent une chape supérieure (21) et deux chapes inférieures (22) transversalement espacées.

6. Dispositif d'interface selon la revendication 5, dans lequel la chape supérieure (21) et les chapes inférieures (22) présentent chacune plusieurs points d'articulation (211, 221).

7. Dispositif d'interface selon l'une quelconque des revendications précédentes, dans lequel les moyens de liaison coté outil (31, 32) sont agencés suivant une configuration en trois points, et comprennent un moyen de liaison supérieur (31) à plusieurs points d'articulation (311) et deux moyens de liaison inférieurs (32) transversalement espacés et comportant chacun un crochet d'attelage (321).

8. Système d'interface (400) pour relier un engin agricole (200) à un outil (300) de travail du sol, comprenant un dispositif d'interface (100) selon l'une quelconque des revendications 1 à 7, des capteurs (410) amovibles aptes à être installés sur l'outil, un module de contrôle électrique (420) relié auxdits capteurs, un module de contrôle hydraulique (430) relié au module de contrôle électrique et pilotant le dispositif d'interface via une alimentation hydraulique (440).

9. Système d'interface selon la revendication 8, prise en combinaison avec la revendication 2, comprenant en outre, pour au moins un vérin de levage (81a, 81b), un premier accumulateur hydropneumatique relié à une chambre du vérin et un deuxième accumulateur hydropneumatique relié à l'autre chambre du vérin, de sorte à réaliser un transfert de charge variable sur l'outil.

10. Engin agricole (200) **caractérisé en ce qu'**il comporte un dispositif d'interface (100) selon l'une quelconque des revendications 1 à 7, monté sur un attelage (210).

11. Engin agricole selon la revendication 10, étant un tracteur agricole (200) à roues (251, 252), dans lequel l'attelage (210) est de type trois points à relevage.

12. Outil agricole (300) **caractérisé en ce qu'**il comporte un dispositif d'interface (100) selon l'une quelconque des revendications 1 à 7.

13. Outil agricole selon la revendication 12, étant un outil aratoire (300).

14. Machine agricole **caractérisée en ce qu'**elle comprend : un engin agricole (200) selon la revendication 10 ou 11 relié à un outil (300) ; ou un outil agricole selon la revendication 12 ou 13 relié à un engin agricole (200).

## Patentansprüche

1. Schnittstellenvorrichtung (100, 100', 100") zum mechanischen Verbinden eines landwirtschaftlichen Geräts (200) über eine Kupplung (210) mit einem Bodenbearbeitungswerkzeug (300), umfassend geräteseitige Verbindungsmittel (21, 22), die an der Kupplung des Geräts montiert werden können, werkzeugseitige Verbindungsmittel (31, 32), die an das Werkzeug montiert werden können, und einen proximalen Rahmen (40), der fest mit den geräteseitigen Verbindungsmitteln verbunden ist, **dadurch gekennzeichnet, dass** sie Schiebeelemente (50, 51, 52), die fest mit den werkzeugseitigen Verbindungsmitteln verbunden sind, wobei die Elemente in Längsverschiebung in Bezug auf den proximalen Rahmen beweglich sind, so dass eine Höhe der werkzeugseitigen Verbindungsmittel eingestellt wird, und einen distalen Rahmen (60) umfasst, der parallel zum proximalen Rahmen verläuft und in Bezug auf diesen drehbeweglich ist.

2. Schnittstellenvorrichtung nach Anspruch 1, umfassend mindestens einen Hubzylinder (81a, 81b) zum Heben und Senken der Schiebeelemente (50, 51, 52) auf eine gewünschte Höhe.

3. Schnittstellenvorrichtung nach Anspruch 1 oder 2, ferner umfassend einen seitlichen Steuerzylinder (82) zum Schwenken des distalen Rahmens (60) in einer bestimmten Neigung.

4. Schnittstellenvorrichtung nach einem der vorhergehenden Ansprüche, wobei die Schiebeelemente ein oberes Schiebe-/Schwenkelement (51), das fest mit einem oberen Verbindungsmittel (31) verbunden ist, und zwei untere Schiebeelemente (52a, 52b) umfassen, die in Querrichtung voneinander beabstandet und jeweils fest mit einem unteren Verbindungsmittel (32) verbunden sind, wobei das obere Schiebe-/Schwenkelement mit jedem unteren Schiebeelement mittels einer Verbindungsstange (70) gekoppelt ist, die an jedem ihrer Enden (71, 72) gelenkig ist.

5. Schnittstellenvorrichtung nach einem der vorhergehenden Ansprüche, wobei die geräteseitigen Verbindungsmittel (21, 22) gemäß einer Dreipunkt-Konfiguration angeordnet sind und einen oberen Gabelkopf (21) und zwei untere Gabelköpfe (22) umfassen, die in Querrichtung voneinander beabstandet sind.

6. Schnittstellenvorrichtung nach Anspruch 5, wobei der obere Gabelkopf (21) und die unteren Gabelköpfe (22) jeweils mehrere Gelenkpunkte (211, 221) aufweisen.

7. Schnittstellenvorrichtung nach einem der vorhergehenden Ansprüche, wobei die werkzeugseitigen Verbindungsmittel (31, 32) gemäß einer Dreipunkt-Konfiguration angeordnet sind und ein oberes Verbindungsmittel (31) mit mehreren Gelenkpunkten (311) und zwei untere Verbindungsmittel (32) umfassen, die in Querrichtung voneinander beabstandet sind und jeweils einen Kupplungshaken (321) umfassen.

8. Schnittstellensystem (400) zum Verbinden eines landwirtschaftlichen Geräts (200) mit einem Bodenbearbeitungswerkzeug (300), umfassend eine Schnittstellenvorrichtung (100) nach einem der Ansprüche 1 bis 7, bewegliche Sensoren (410), die an dem Werkzeug installiert werden können, ein elektrisches Steuermodul (420), das mit den Sensoren verbunden ist, ein hydraulisches Steuermodul (430), das mit dem elektrischen Steuermodul verbunden ist und die Schnittstellenvorrichtung über eine hydraulische Stromversorgung (440) ansteuert.

9. Schnittstellensystem nach Anspruch 8, in Kombination mit Anspruch 2, ferner umfassend für mindestens einen Hubzylinder (81a, 81b) einen ersten hydropneumatischen Speicher, der mit einer Kammer des Zylinders verbunden ist, und einen zweiten hydropneumatischen Speicher, der mit der anderen Kammer des Zylinders verbunden ist, so dass eine variable Lastübertragung auf das Werkzeug erfolgt.

10. Landwirtschaftliches Gerät (200), **dadurch gekennzeichnet, dass** es eine Schnittstellenvorrichtung (100) nach einem der Ansprüche 1 bis 7 aufweist, die an einer Kupplung (210) montiert ist.

11. Landwirtschaftliches Gerät nach Anspruch 10, wobei es sich um einen landwirtschaftlichen Traktor (200) mit Rädern (251, 252) handelt, wobei die Kupplung (210) vom Dreipunkt-Hubtyp ist.

12. Landwirtschaftliches Werkzeug (300), **dadurch gekennzeichnet, dass** es eine Schnittstellenvorrichtung (100) nach einem der Ansprüche 1 bis 7 umfasst.

13. Landwirtschaftliches Werkzeug nach Anspruch 12, wobei es sich um ein Pflügewerkzeug (300) handelt.

14. Landwirtschaftliche Maschine, **dadurch gekennzeichnet, dass** sie Folgendes umfasst: ein landwirtschaftliches Gerät (200) nach Anspruch 10 oder 11, das mit einem Werkzeug (300) verbunden ist; oder ein landwirtschaftliches Werkzeug nach Anspruch 12 oder 13, das mit einem landwirtschaftlichen Gerät (200) verbunden ist.

## Claims

1. An interface device (100, 100', 100") for mechanically connecting an agricultural machinery (200), via a hitch (210), to a soil-working tool (300), comprising connection means (21, 22) on the machinery side, capable of being mounted on the hitch of the machinery, connection means (31, 32) on the tool side, capable of being mounted on the tool, and a proximal frame (40) secured to the connection means on the machinery side, **characterised in that** it comprises sliding elements (50, 51, 52) secured to the connection means on the tool side, said elements being able to move in longitudinal translation with respect to the proximal frame so as to adjust a height of said connection means on the tool side, and a distal frame (60) parallel to the proximal frame and able to rotate relative thereto.

2. The interface device according to claim 1, comprising at least one lifting cylinder (81a, 81b) for raising and lowering the sliding elements (50, 51, 52) at a desired height.

3. The interface device according to claim 1 or 2, further comprising a lateral control cylinder (82) for pivoting the distal frame (60) at a given inclination.

4. The interface device according to any one of the preceding claims, wherein the sliding elements comprise an upper sliding/pivoting element (51), secured to an upper connection means (31), and two lower sliding elements (52a, 52b) transversely spaced apart and each secured to a lower connection means (32), the upper sliding/pivoting element being coupled to each lower sliding element by means of a connecting rod (70) hinged at each of its ends (71, 72).

5. The interface device according to any one of the preceding claims, wherein the connection means (21, 22) on the machinery side are arranged according to a three-point configuration, and comprise an upper clevis (21) and two lower clevises (22) transversely spaced apart.

6. The interface device according to claim 5, wherein the upper clevis (21) and the lower clevises (22) each have several hinge points (211, 221).

7. The interface device according to any one of the preceding claims, wherein the connection means (31, 32) on the tool side are arranged according to a three-point configuration, and comprise an upper connection means (31) at several hinge points (311) and two lower connection means (32) transversely spaced apart and each comprising a hitch hook (321).

8. An interface system (400) for connecting an agricultural machinery (200) to a soil-working tool (300), comprising an interface device (100) according to any one of claims 1 to 7, removable sensors (410) capable of being installed on the tool, an electrical control module (420) connected to said sensors, a hydraulic control module (430) connected to the electrical control module and controlling the interface device via a hydraulic power supply (440).

9. The interface system according to claim 8, considered in combination with claim 2, further comprising, for at least one lifting cylinder (81a, 81b), a first hydropneumatic accumulator connected to one chamber of the cylinder and a second hydropneumatic accumulator connected to the other chamber of the cylinder, so as to carry out a variable load transfer on the tool.

10. An agricultural machinery (200) **characterised in that** it comprises an interface device (100) according to any one of claims 1 to 7, mounted on a hitch (210).

11. The agricultural machinery according to claim 10, being an agricultural tractor (200) with wheels (251, 252), wherein the hitch (210) is of the three-point lift type.

12. An agricultural tool (300) **characterised in that** it comprises an interface device (100) according to any one of claims 1 to 7.

13. The agricultural tool according to claim 12, being a ploughing tool (300).

14. An agricultural machine **characterised in that** it comprises: an agricultural machinery (200) according to claim 10 or 11 connected to an tool (300); or an agricultural tool according to claim 12 or 13 connected to an agricultural machinery (200).
